# EUROPEAN PATENT APPLICATION

(11) **EP 3 179 442 A1**
(43) Date of publication of application: **14.06.2017**
(21) Application number: 15306960.4
(22) Date of filing: 09.12.2015
(51) Int. Cl.: G06T 7/20

(54) **METHOD FOR TRACKING A REGION OF INTEREST, COMPUTER READABLE STORAGE MEDIUM AND APPARATUS CONFIGURED TO TRACK A REGION OF INTEREST**

(71) Applicant: Thomson Licensing, 92130 Issy-les-Moulineaux (FR)
(72) Inventor: Jachalsky, Joern, 30974 Wennigsen (DE); Meuel, Holger, 30459 Hannover (DE); Joern, Ostermann, 30655 Hannover (DE); Reso, Matthias, 31863 Coppenbruegge (DE)
(74) Representative: Huchet, Anne

(57) **Abstract**

A method for tracking a region of interest in a sequence of images, a computer readable medium and an apparatus (2) configured to track a region of interest in a sequence of images. A segmenter (5) subjects (S1) the images to a temporally consistent oversegmentation. A region tracker (6) then determines (S2) activations for the region of interest in at least a subset of the images and bridges (S3) a missing activation for the region of interest based on results of the temporally consistent oversegmentation.

## Description

### FIELD

The present solution relates to a method for tracking a region of interest in a sequence of images. Further, the solution relates to a computer readable storage medium having stored therein instructions enabling tracking a region of interest in a sequence of images. Furthermore, the solution relates to an apparatus configured to track a region of interest in a sequence of images.

### BACKGROUND

The detection of regions of interest, also referred to as ROIs or salient regions, in an image stream is an important research topic. For a video stream or a sequence of frames, generally referred to as an image sequence or a sequence of images, the tracking of ROIs can be crucial for example for surveillance applications. Furthermore, there are ROI based video encoding schemes only encoding the ROI in high quality while saving bandwidth in the remaining regions.

The ROIs or salient regions need to be detected. Within in the context of this specification a detection of a ROI in one image is referred to as an activation.

Furthermore, in computer vision, image segmentation is a frequently applied process in which a digital image is partitioned into multiple segments. It is a goal of a segmentation process to simplify and/or change the representation of an image into a more meaningful and easier to analyze version. Image segmentation is typically applied to locate objects or boundaries in images. Common approaches to object segmentation are based on intensity thresholding and work well for images with homogeneous objects of interest. Sometimes it is not possible to set segmentation parameters such that all the objects of interest are extracted from the background or each other without oversegmenting the image. Oversegmentation is the process by which the objects that are segmented from the background are themselves segmented or fractured into subcomponents. Most superpixel algorithms oversegment the image. This means that most of the important boundaries in the image are found, but at the cost of generating many insignificant boundaries. During oversegmentation a label is assigned to every pixel in an image, i.e. every pixel is associated to a certain segment, such that pixels with the same label share certain characteristics. The result of oversegmentation is a set of segments, which are also referred to as superpixels, that collectively cover the entire image. Superpixels basically are groups of spatially coherent pixels sharing similar low-level features.

Dondera et al. [1] disclose an interactive video segmentation system. In a preprocessing stage, optical flow is computed forward and back and then temporary coherent superpixel segments are generated for each video image. The resulting initial segmentation can be corrected by a user who manually corrects the superpixel labels. Once the image labeling is satisfactory, the user informs a system of this and the segmentation of the image stream is performed.

Furthermore, in Lezama et al. [2] a method is disclosed in which spatio-temporal oversegmentation is applied to an image stream in that regions respecting object boundaries are formed.

The method applies a spatio-temporal video segmentation algorithm, which incorporates long range motion cues from past and future images in the form of clusters of point tracks with coherent motion.

When referring back to the detection of ROIs, Min et al. [3] disclose an approach for detecting moving objects in dynamic video sequences. A Markov random field (MRF) approach based on geometric reconstruction is applied to handle the concurrent motions in segmenting moving objects from dynamic backgrounds. The MRF model is represented with superpixels. A consistent shape of superpixels across images for a temporally coherent detection of moving objects is achieved using a superpixel flow, wherein superpixels in a reference image are coherently propagated to the next image via a seed tracking algorithm.

Missing or false activations can result in a situation, wherein the ROIs are not correctly or consistently tracked along the image sequence. It is even possible that incorrect ROIs are tracked. In particular for surveillance applications this might lead to an undesired low detection rate. For a ROI based video encoding scheme, this can result in an inefficient use of the available bandwidth. For activity based video segmentation, this might cause incorrect or inconsistent segmentation results.

### SUMMARY

It is an object of the present principles to provide a method for tracking a region of interest in a sequence of images, a computer readable storage medium having stored therein instructions enabling tracking a region of interest in a sequence of images, and an apparatus configured to track a region of interest in a sequence of images, which are enhanced, in particular with respect to performance, robustness and reliability of region tracking.

According to one aspect, a method for tracking a region of interest in a sequence of images comprises:
- subjecting the images to a temporally consistent oversegmentation;
- determining activations for the region of interest in at least a subset of the images; and
- bridging a missing activation for the region of interest based on results of the temporally consistent oversegmentation.

The object is further solved by a computer readable storage medium having stored therein instructions enabling tracking a region of interest in a sequence of images, wherein the instructions, when executed by a computer, cause the computer to:
- subject the images to a temporally consistent oversegmentation;
- determine activations for the region of interest in at least a subset of the images; and
- bridging a missing activation for the region of interest based on results of the temporally consistent oversegmentation.

Also, in one embodiment an apparatus configured to track a region of interest in a sequence of images comprises:
- a segmenter configured to subject the images to a temporally consistent oversegmentation; and
- a region tracker configured to determine activations for the region of interest in at least a subset of the images and to bridge a missing activation for the region of interest based on results of the temporally consistent oversegmentation.

In another embodiment, an apparatus configured to track a region of interest in a sequence of images comprises a processing device and a memory device having stored therein instructions, which, when executed by the processing device, cause the apparatus to:
- subject the images to a temporally consistent oversegmentation;
- determine activations for the region of interest in at least a subset of the images; and
- bridge a missing activation for the region of interest based on results of the temporally consistent oversegmentation.

The solution utilizes a temporally consistent oversegmentation of the sequence of images in order to enhance the performance and robustness of the region tracking. The oversegmentation is based on temporally consistent superpixels. Superpixels being temporally consistent share the same label, i.e. the same identifier. With the help of this label it can be determined which superpixels are temporally connected in the sequence of images. In other words, the temporally consistent oversegmentation is applied to bridge images comprising missing activations, i.e. images having no activations. This is performed in order to correctly fill in activations in the images in which the activations are missing. The solution for tracking a region of interest provides high performance and robustness. Furthermore, the reliability of the tracking is enhanced.

Sequences of temporally consistent superpixels are generated for the images of the sequence of images, e.g. using the approach described in [4]. Determining activations for the region of interest in at least a subset of the images in this case comprises performing a preliminary activation of a superpixel of a sequence of temporally consistent superpixels.

In one embodiment, the preliminary activation of the superpixel existing in a first image is converted into a final activation if a further superpixel that is part of the sequence of temporally consistent superpixels and exists in a second image of the image sequence is preliminarily activated. There thus is a two-step process comprising a preliminary activation and a conversion thereof into a final activation. The preliminary activation in the first image is converted into a final activation if a superpixel of the same sequence is activated in a subsequent image. This activation in fact confirms the first activation and since the first and the second image are linked via the sequence of temporally consistent superpixels, the first activation is confirmed and hence converted into a final and thus valid activation.

The terms "subsequent" or "following" generally refer to the order of the images on a time scale. This means a subsequent or following image appears later in time in the sequence of images than a preceding or earlier image.

In one embodiment, the solution is enhanced in that corresponding superpixels existing in at least one temporally intermediate image, the at least one temporally intermediate image existing in the image sequence in an interval ranging from the first image to and including the second image, are finally activated upon activation of the superpixel in the second image.

The entire interval ranging from the first image to and including the second image is confirmed in the sense that the activations are converted into final activations.

The solution can be further enhanced in that multiple activations are required in the interval to initiate the gap-filling final activation of superpixels in the temporally intermediate images comprising no activations. This renders the solution less susceptible to noise induced activations.

In another embodiment, superpixels existing in the temporally intermediate images are only finally activated if the size of the interval does not exceed a predetermined threshold. This limitation of the size of the interval allows limiting the necessary memory space for buffering the images. In other words, the time between the first and the second image should not exceed a certain number of images or a certain time. This renders the solution less demanding with respect to hardware requirements and furthermore, this measure is particularly advantageous for streaming applications.

In one embodiment, the solution is enhanced in that preliminary activations not being converted into final activations based on the results of the temporally consistent oversegmentation, in particular based on the sequence of temporally consistent superpixels, are discarded in that the preliminary activation is revoked.

The correction of incorrect preliminary activations prevents, for example, a tracking application from false tracking. In particular, when the interval between the first and the second image exceeds the predetermined threshold, the preliminary activations are discarded.

In one embodiment, a superpixel is preliminarily activated in a certain image if at least a specified number of pixels being part of the superpixel in the image are activated. In other words, there are at least n pixels being activated in the superpixel. The minimum number is n=1. The greater the number of activated pixels n, the less susceptible is the algorithm with regard to noisy activations.

In one embodiment, bridging the missing activation for the region of interest based on results of the temporally consistent oversegmentation comprises converting a preliminary activation of a superpixel existing in a first image into a final activation if two or more further superpixels being part of the sequence of temporally consistent superpixels and existing in further images of the image sequence are preliminarily activated. It may be advantageous if multiple activations are required to initiate a final activation of the superpixels in the gap. Hence, the corresponding superpixels need to be activated multiple times between a first image and a later image in order to initiate a final activation of the superpixels.

There can be a situation in which a superpixel is split, for example because it is getting too large. There is one part of the superpixel keeping its old label and another part to which a new label is assigned. If there are no pending activations for the superpixel with the old label prior to the split, no further action is required. However, if there are pending (preliminary) activations for the superpixel having the old label prior to the split, a new pending activation for the superpixel having the new label is to be generated. As the pending activation originates from an activation of the superpixel with the original label, the image number or time stamp for the new pending activation is set to the number or time of this particular initial image. This safeguards that the correct maximum temporal distance is respected even for the split part of the superpixel.

### BRIEF DESCRIPTION OF THE DRAWINGS

- Fig. 1: is a simplified flow chart illustrating a method for tracking a region of interest in a sequence of images;
- Fig. 2: schematically depicts a first embodiment of an apparatus configured to track a region of interest in a sequence of images;
- Fig. 3: schematically shows a second embodiment of an apparatus configured to track a region of interest in a sequence of images;
- Fig. 4: is a simplified illustration of a first sequence of images;
- Fig. 5: is a simplified illustration of a second sequence of images;
- Fig. 6: shows a comparison between results of the present solution and a sliding window approach for a first sample sequence;
- Fig. 7: shows a comparison between results of the present solution and a sliding window approach for a second sample sequence; and
- Fig. 8: shows a comparison between results of the present solution and a sliding window approach for a third sample sequence.

### DETAILED DESCRIPTION OF PREFERRED EMBODIMENTS

For a better understanding the principles of embodiments of the invention shall now be explained in more detail in the following description with reference to the figures. It is understood that the invention is not limited to these exemplary embodiments and that specified features can also expediently be combined and/or modified without departing from the scope of the present invention as defined in the appended claims. In the drawings, the same or similar types of elements or respectively corresponding parts are provided with the same reference numbers in order to prevent the item from needing to be reintroduced.

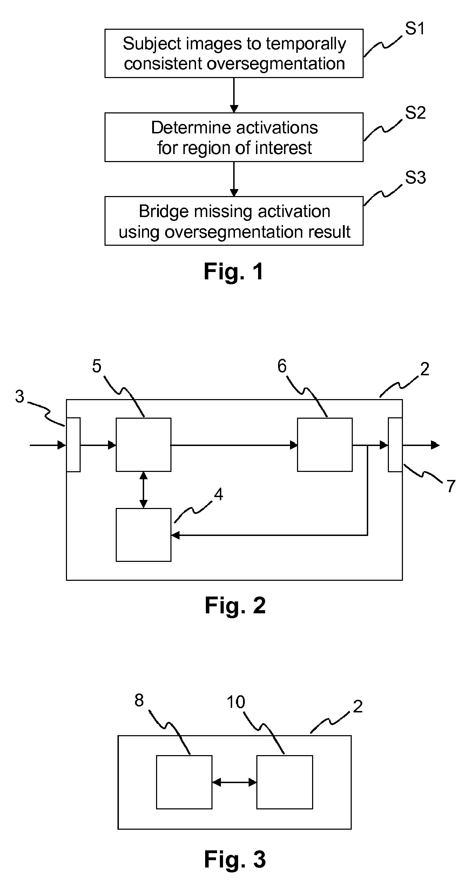

Fig. 1 depicts a simplified flow chart illustrating a method for tracking a region of interest in a sequence of images. In a first step S1, the images of the sequence of images are subjected to a temporally consistent oversegmentation. The temporally consistent oversegmentation can be performed using a suitable and known algorithm for oversegmentation. In the step of generating an oversegmentation, sequences of temporally consistent superpixels are determined. Subsequently, in step S2, activations are determined for a region of interest (ROI) in at least a subset of the images. Activations for the sequence of images can be on pixel level. Possible approaches to obtain the activations are, for example, a Region of Interest detector for moving objects, user specific input or another suitable saliency detector. Then, in case of at least one missing activation for an ROI in an image the missing activation is bridged in step S3 based on the result of the temporally consistent oversegmentation, which was performed in step S1.

A superpixel is preliminarily activated in a certain image if at least n pixels being part of the superpixel in the particular image are activated. In other words, there are at least n pixels being activated in the superpixel. The minimum number is n=1. The greater the number of activated pixels n, the less susceptible is the algorithm with regard to noisy activations. However, on the other hand when the algorithm is tuned to be less prone to noise induced activations, this leads to a lower sensitivity.

Fig. 2 shows a simplified schematic illustration of an apparatus 2 configured to track an ROI in a sequence of images. The apparatus 2 comprises a segmenter 5 and a region tracker 6. The apparatus 2 receives a sequence of images, for example a video sequence, e.g. via an input 3 or from a local storage unit 4. The segmenter 5 is configured to subject the images of the sequence of images to a temporally consistent oversegmentation. The region tracker 6 is configured to determine activations for the ROI in at least a subset of the images. Furthermore, the region tracker 6 is configured to bridge a missing activation for the ROI based on the results of the temporally consistent oversegmentation, which is earlier performed by the segmenter 5. The processing results are preferably made available via an output 7. They may also be stored on the local storage unit 4, processed for being rendered on a display connected to the apparatus 2, or processed for being transmitted to further processing units. The output 7 may also be combined with the input 3 into a single bidirectional interface. Each of the different units 5, 6 can be embodied as a different processor. Of course, the different units 5, 6 may likewise be fully or partially combined into a single unit or implemented as software running on a processor.

In Fig. 3, there is another apparatus 2 configured to track an ROI in a sequence of images. The apparatus 2 comprises a processing device 8 and a memory device 10. The apparatus 2 is for example a computer or workstation. The memory device 10 has stored therein instructions, which, when executed by the processing device 8, cause the apparatus 2 to:
- subject the images of the sequence of images to a temporally consistent oversegmentation;
- determine activations for the ROI in at least a subset of the images; and
- bridge a missing activation for the ROI based on results of the temporally consistent oversegmentation which was performed earlier.

For example, the processing device 8 can be a processor adapted to perform the steps according to one of the described methods. In an embodiment said adaptation comprises that the processor is configured, e.g. programmed, to perform steps according to one of the described methods.

A processor as used herein may include one or more processing units, such as microprocessors, digital signal processors, or combination thereof.

The local storage unit and the memory device 10 may include volatile and/or non-volatile memory regions and storage devices such as hard disk drives, DVD drives. A part of the memory is a non-transitory program storage device readable by the processing device 8, tangibly embodying a program of instructions executable by the processing device 8 to perform program steps as described herein according to the principles of the invention.

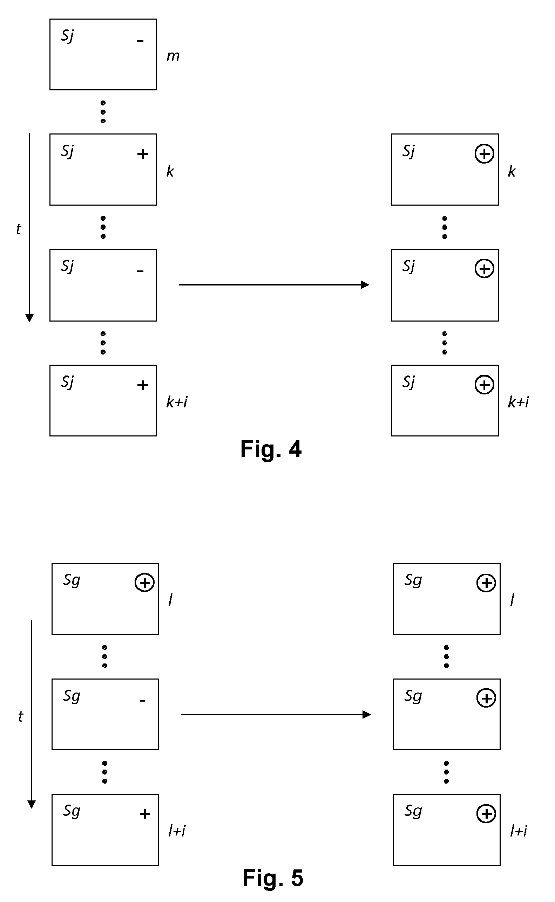

Further details of the method for tracking an ROI and the operation of the apparatus 2 configured to track an ROI in a sequence of images will become apparent from the following Figs. 4 and 5. Each figure schematically illustrates a sequence of images and the process of bridging missing activations.

In Fig. 4, there is a sequence of images drawn one below the other on the left side. By way of an example, four images of the sequence of images are depicted. Images at the top are earlier than the images at the bottom. This is indicated by the downward arrow labeled with ***t*** for the time. A superpixel *Sj* having the label identifier ***j*** is preliminarily activated in image ***k***. This is indicated by showing *Sj,* representing the superpixel having the identifier ***j***, in the schematic image and by denoting the sign "+" in the image. There are no pending activations in the images ***m*** < ***k*** for the superpixel *Sj.* This is indicated in the image labeled ***m*** by the sign "-".

If the superpixel ***Sj*** is, for example, again preliminarily activated in an image ***k* +** 1 (not shown), there would be no gap and no missing activation. In this particular case, both preliminary activations for the superpixel ***Sj*** in images ***k*** and ***k* + 1** are directly converted into final and valid activations (not depicted).

However, according to the example in Fig. 4 the superpixel ***Sj*** is again activated in image ***k* + *i*** with ***i* > 1** and there is no preliminary activation between image ***k*** and ***k* + *i*** for a superpixel ***Sj**.* In other words, there is a second image, which is the image ***k* + *i*,** and a first image, which is the image ***k,*** having a gap with a non-activated superpixel ***Sj*** in-between. As a consequence of the activation of the superpixel ***Sj*** in the second image, i.e. image ***k* + *i*,** all the superpixels ***Sj*** starting from image ***k*** and ending at image ***k* + *i*** obtain a final and valid activation. This is illustrated in the right side of Fig. 4. The final and valid activation is indicated by the sign + surrounded by a circle.

Only final and valid activations indicate a valid ROI or salient region. Superpixels that only have a preliminary activation are finally revoked. Thus, their activation is not taken into consideration for region tracking.

In Fig. 5, there is another situation in which a superpixel ***Sg*** having the label identifier ***g*** obtained a final and valid activation in image ***l***. This is again indicated by placing ***Sg*** in the image and by labeling the same with the sign + placed in a circle. In addition to this, the superpixel ***Sg*** is preliminarily activated in image ***l* + 1.** Then, the preliminary activation for this superpixel ***Sg*** is directly converted into a final and valid activation (not depicted). If, however, as shown in Fig. 5, the superpixel ***Sg*** is preliminarily activated in image ***l* + i** with ***i* > 1** and there is no preliminary activation between the image ***l*** and the image ***l* + *i*** (this is indicated by the sign -), all the superpixels with label identifier g starting from image ***l*** and ending at image ***l* + *i*** obtain a final and valid activation. This is illustrated in the right column of Fig. 5 by the sign + placed in a circle.

In order to allow for a streaming-capable version and to have an upper bound for the memory to buffer the images, the time between the two preliminary activations in the first and the second image should not exceed a certain number of images. Therefore, a threshold τ for the maximum temporal distance between two activations can be introduced. Only if the number ***i*** of images between the two activations in the first and the second image is smaller than this threshold, which means ***i*** < τ, the pending preliminary or final activation for the superpixel remains still valid and thus considered. If ***i* ≥ τ** the pending activations are discarded. In this case, the next activation does not initiate a final activation of the superpixels in the interval. Hence, the next activation is regarded as the first preliminary activation for this superpixel. This entails that for each activation the image number or a time stamp of the corresponding image has to be stored in order to calculate the temporal distance with respect to the currently processed image.

In another aspect of the present principles, there can be multiple activations required to initiate a final activation of the superpixels in the gap. Hence, when referring to Figs. 4 and 5, the superpixels ***Sj*** or ***Sg*** have to be activated multiple times between image ***k*** and ***k*** + ***i*** and ***l*** and ***l*** + ***i***, respectively, in order to initiate a final activation of the superpixels ***Sj*** or ***Sg***.

Preferably, also the situations in which superpixels are split into new superpixels or when superpixels are terminated, for example because they are getting too small, are handled. When a superpixel is terminated, the label identifier is removed or discarded. Thus, if there are pending activations for this particular superpixel, for example ***Sj*** or ***Sg*** having the identifier ***j*** or ***g***, no further actions are taken since these pending activations are discarded if the temporal distance between the two activations exceeds the above described threshold τ.

If a superpixel with the label identifier ***o*** is split into two superpixels, for example because the superpixel is becoming too big, a new label identifier ***õ*** is introduced. One part of the initial superpixel keeps the old identifier ***o*** and the remaining part is assigned the new label identifier ***õ***. If there are no pending activations for the superpixel with the label identifier ***o*** prior to the spit, no further actions are required. However, if there are pending activations for this superpixel with the label identifier ***o*** prior to the split, a new pending activation for the superpixel with the label identifier ***õ*** is generated. As the generated pending activation originates from an activation of the superpixel with the original label identifier ***o***, the image number or time stamp stored with this pending activation is assigned to the superpixel having the new label identifier ***õ***. By that measure, the correct maximum temporal distance is always kept, even for split superpixels.

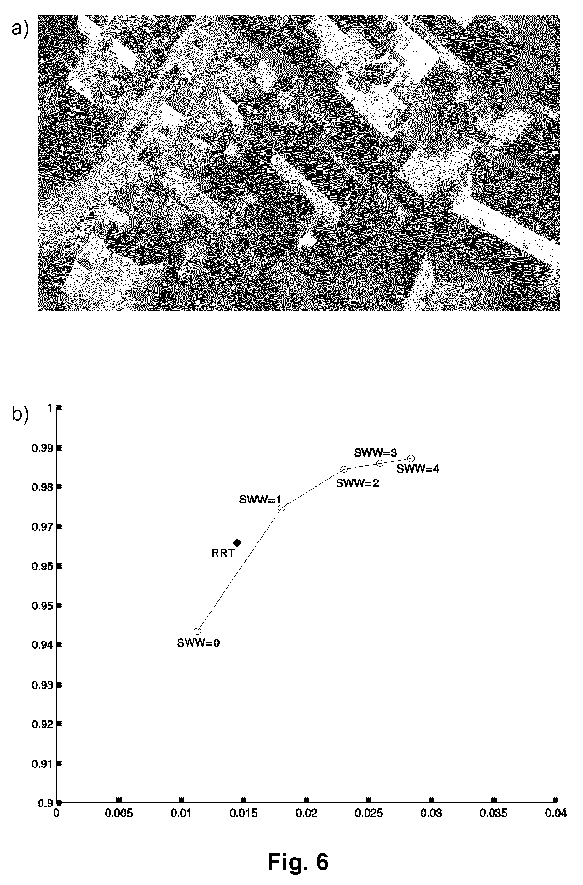

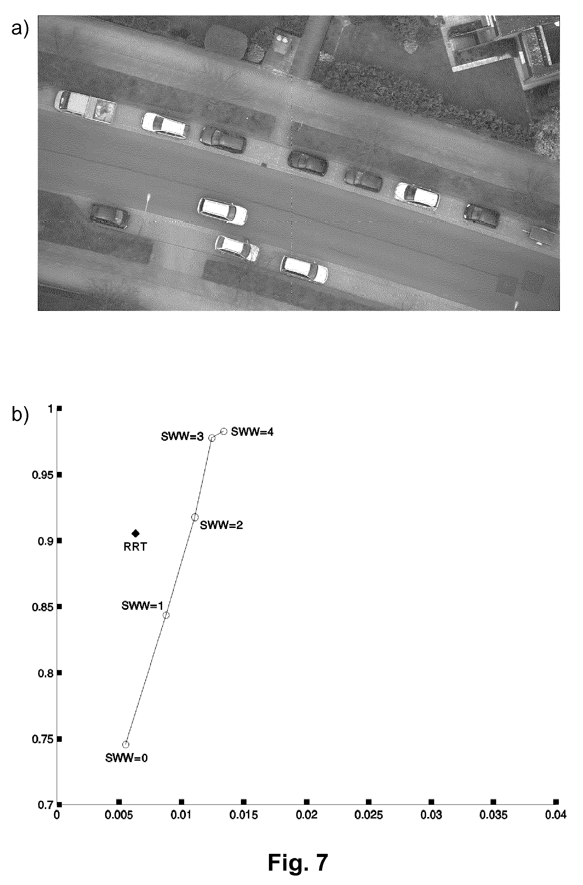

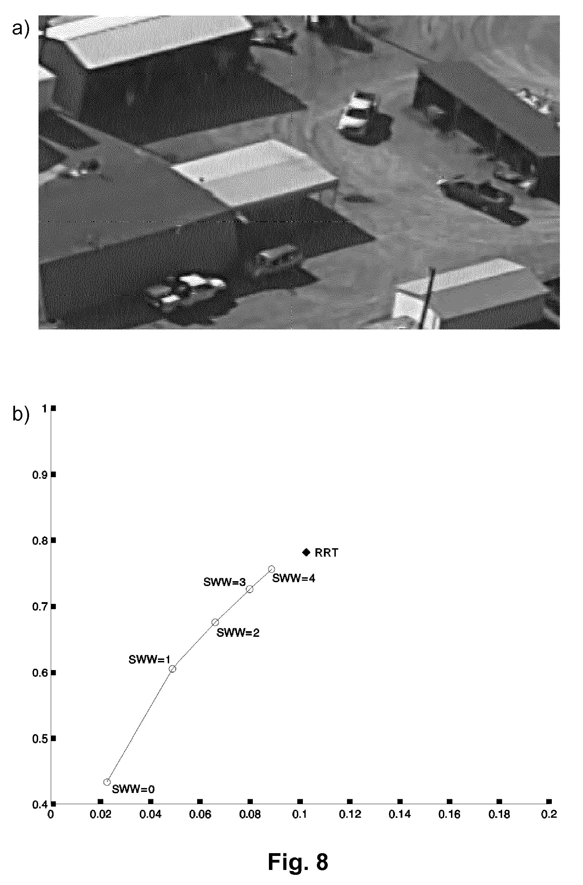

The method and the apparatus according to aspects of the present principles provide an enhanced performance. This will be outlined with reference to the Figs. 6 to 8.

A number of test sequences were analyzed using the activation results generated by the sliding window approach and by the method according to aspects of the present principles. Figs. 6a) to 8a) show images taken from the three sample sequences. The corresponding Receiver Operator Characteristics (ROCs) are shown in Figs. 6b) to 8b). These depict the ratio between true positives and false positives, a ratio that is crucial when assessing the resulting performance of the tracking.

In the graphs, the number "SWW" indicates the length of a sliding window, as described in [5]. In all graphs, the abscissa shows the false positive rate and the ordinate shows the true positive rate. The results obtained using the method and apparatus according to aspects of the present principles are labeled with "RRT", the data point is shown as a diamond-shaped dot. For all the sequences, the overall performance of the method and apparatus according to embodiments of the present principles is superior to the sliding window approach.

All named characteristics, including those taken from the drawings alone, and individual characteristics, which are disclosed in combination with other characteristics, are considered alone and in combination as important to the present principles. Embodiments can be fulfilled through individual characteristics or a combination of several characteristics. Features which are combined with the wording "in particular" or "especially" are to be treated as preferred embodiments.

### CITATIONS

[1] Dondera et al.: "Interactive Video Segmentation Using Occlusion Boundaries and Temporally Coherent Superpixels", IEEE Winter Conference on Applications of Computer Vision (WACV 2014), pp. 784-791.
[2] Lezama et al.: "Track to the Future: Spatio-temporal Video Segmentation with Long-range Motion Cues", Proceedings of the IEEE Conference on Computer Vision and Pattern Recognition (CVPR 2011), pp. 3369-3376.
[3] Min et al.: "A superpixel MRF approach using high-order likelihood for moving object detection", 21st International Conference on Pattern Recognition (ICPR 2012), pp. 266-269.
[4] Reso et a.: "Temporally Consistent Superpixels", 2013 IEEE International Conference on Computer Vision (ICCV), pp. 385-392.
[5] Meuel et al.: "Superpixel-based Segmentation of Moving Objects for Low Bitrate ROI Coding Systems", 10th IEEE International Conference on Advanced Video and Signal Based Surveillance (AVSS 2013), pp. 395-400.

## Claims

1. A method for tracking a region of interest in a sequence of images, the method **comprising:**
- subjecting the images to a temporally consistent oversegmentation (S1);
- determining (S2) activations for the region of interest in at least a subset of the images; and
- bridging (S3) a missing activation for the region of interest based on results of the temporally consistent oversegmentation.

2. The method according to claim 1, **wherein** subjecting the images to a temporally consistent oversegmentation comprises generating sequences of temporally consistent superpixels in the images of the sequence of images, wherein determining activations for the region of interest in at least a subset of the images comprises performing a preliminary activation of a superpixel of a sequence of temporally consistent superpixels.

3. The method according to claim 2, **wherein** bridging the missing activation for the region of interest based on results of the temporally consistent oversegmentation comprises converting a preliminary activation of a superpixel existing in a first image into a final activation if a further superpixel being part of the sequence of temporally consistent superpixels and existing in a second image of the image sequence is preliminarily activated.

4. The method according to claim 3, **wherein** corresponding superpixels of the sequence of temporally consistent superpixels existing in at least one temporally intermediate image, the at least one temporally intermediate image existing in the image sequence in an interval ranging from the first image to and including the second image, are finally activated upon activation of the superpixel in the second image.

5. The method according to claim 4, **wherein** superpixels existing in temporally intermediate images are only activated if the size of the interval does not exceed a predetermined threshold.

6. The method according to one of claims 2 to 5, **wherein** preliminary activations not being converted into final activations based on the results of the temporally consistent oversegmentation are discarded.

7. The method according to claim 6, **wherein** a preliminary activation is discarded by revoking the preliminary activation.

8. The method according to claim 2, **wherein** a superpixel is preliminarily activated in a certain image if at least a specified number of pixels being part of the superpixel in the image are activated.

9. The method according to claim 2, **wherein** bridging the missing activation for the region of interest based on results of the temporally consistent oversegmentation comprises converting a preliminary activation of a superpixel existing in a first image into a final activation if two or more further superpixels being part of the sequence of temporally consistent superpixels and existing in further images of the image sequence are preliminarily activated.

10. A computer readable storage medium having stored therein instructions enabling tracking a region of interest in a sequence of images, wherein the instructions, when executed by a computer, cause the computer to:
- subject the images to a temporally consistent oversegmentation (S1);
- determine (S2) activations for the region of interest in at least a subset of the images; and
- bridge (S3) a missing activation for the region of interest based on results of the temporally consistent oversegmentation.

11. An apparatus (2) configured to track a region of interest in a sequence of images, the apparatus (2) **comprising:**
- a segmenter (5) configured to subject (S1) the images to a temporally consistent oversegmentation; and
- a region tracker (6) configured to determine (S2) activations for the region of interest in at least a subset of the images and to bridge (S3) a missing activation for the region of interest based on results of the temporally consistent oversegmentation.

12. An apparatus (2) configured to track a region of interest in a sequence of images, the apparatus (2) comprising a processing device (8) and a memory device (10) having stored therein instructions, which, when executed by the processing device (8), cause the apparatus (2) to:
- subject the images to a temporally consistent oversegmentation (S1);
- determine (S2) activations for the region of interest in at least a subset of the images; and
- bridge (S3) a missing activation for the region of interest based on results of the temporally consistent oversegmentation.
